Europäisches Patentamt

(19) European Patent Office

Office européen des brevets

(11) Publication number: **0 064 217**
A1

## (12) EUROPEAN PATENT APPLICATION

(21) Application number: 82103329.7

(22) Date of filing: 20.04.82

(51) Int. Cl.³: **F 16 K 31/02**
**F 16 K 51/02, F 16 K 11/04**

(30) Priority: 24.04.81 DE 8112164 U

(43) Date of publication of application:
10.11.82 Bulletin 82/45

(84) Designated Contracting States:
FR GB IT SE

(71) Applicant: EATON S.A.M.
14 Boulevard du Bord de Mer Boite Postale 84
Monaco(MC)

(72) Inventor: Rey, Pierre Jean-Marie
"Lou Mazet" Route de Mont Gros
F-06500 Menton(FR)

(74) Representative: Rüger, Rudolf, Dr.-Ing.
Webergasse 3 Postfach 348
D-7300 Esslingen/Neckar(DE)

(54) Two-way change over valve, particularly for vehicles.

(57) An electromagnetic two-way change-over valve for controlling vacuum connections in vehicles, comprises an valve housing (2) containing an armature bore (5, 6), two valve seats (9, 32) and a ferromagnetic armature (23) movably located in the armature bore. On each of its two faces the armature (23) is provided with a valve closing member (29, 30) that cooperates with a valve seat.

In order to enhance the performance of such a two-way change-over valve, while simultaneously reducing the space requirements of this valve, the oblong armature (23) is provided on each of its two faces with a ferromagnetic flange (24, 25), the diameters of the two flanges being larger than the diameter of the section (26) of the armature (23) located between the flanges, and a substantially cylindrical ferromagnetic connection piece (15), plugged into one side of the armature bore (6), forms parts of the magnetic closing circuit (15, 19) for the armature.

EP 0 064 217 A1

Croydon Printing Company Ltd.

./...

Fig. 3

- 1 -

Two-way change over valve, particularly for vehicles

The innovation relates to an electromagnetic two-way change over valve for controlling of vacuum connections in vehicles, having: a valve housing containing an armature bore connected to a first connection, said housing having a connection piece which contains a first valve seat connected to a second connection and which is inserted sealed at one end into said armature bore and also having a lower housing section arranged at the other end of said armature bore, a second valve seat connected to a third connection being formed in said lower housing section; a ferromagnetic armature movably positioned in the armature bore, said armature having on each of its two faces a valve closing member cooperating each with one of the valve seats, being preloaded to spring in the direction of the second valve seat, and lying in the magnetic closing circuit of a magnet coil which is attached to a core former.

A two-way change over valve is known from practice, in which the core former of the magnet coil is pressed onto the valve housing as a prefabricated component, with an armature inserted into the armature bore of the said valve housing. The armature bore is closed at the one end by a connection piece which is sealed by means of an O-ring. The armature is preloaded by a spring in an axial direction and in this position closes one of the three connections. When the magnet coil is energized, the armature moves counter to the force of the spring in the other direction and opens the previously closed connection, whereby the opposite connection is closed.

- 2 -

In the known change over valve the armature has a relatively high mass, thus necessitating a relatively hard spring for the natural resonance of the change over valve to be sufficiently high for motor vehicle applications. If the spring is softer with the given mass of the armature, it may come about due to the unavoidable vibrations in motor vehicle operation that the valve is subjected to the natural resonance of the armature and that the armature lifts up from the associated valve seat. A hard spring on the other hand requires, with otherwise identical design conditions, a high current through the magnet coil and thus a correspondingly high power consumption, which is not desirable in motor vehicle applications.

Since the core former of the magnet coil is pressed onto the valve housing, the core former and the valve housing must have a sufficient wall thickness prior to their assembly, so that each component is on its own sufficiently stable. This, however, results in an unnecessarily large valve.

The object of the innovation is to create a two-way change over valve that is as small as possible and can be operated with as little electrical power as possible, with the natural resonance of the system formed from armature and the biasing spring being sufficiently high that the change over valve is suitable for motor vehicle applications.

To this end, , the two-way change over valve of the innovation is characterized in that the oblong armature has a ferromagnetic flange on each face, that the two flanges have a greater diameter than the section of the armature lying between the flanges, and that the ferromagnetic connection piece is part of the magnetic closing circuit.

This two-way change over valve has the advantage that large air gap surfaces and small air gap lengths are possible with relatively small armature weight, so that relatively high closing forces can be obtained with reduced power requirement. The reduction in armature weight also permits a softer spring for armature preloading with the same natural resonance of the reversing valve, which in turn reduces the power requirement of the reversing valve.

Since the armature in the section between the two flanges is tapered, it is possible to design the valve housing around the armature with transverse divisions using ultrasonic welding in assembly at this point without the risk of armature sticking when beading from the weld seam emerges into the armature bore.

Coil manufacture and assembly of the two-way change over valve is simplified if the core former of the magnet coil is part of the valve housing and is ultrasonic welded to the lower housing section.

The manufacture of the two-way change over valve is further simplified if the magnetic circuit has a C-shaped yoke straddling the magnet coil on each of its faces, and when the inserted connection piece sits in one of the two shanks of the C-shaped yoke.

If the connection piece is connected to the yoke by a press fit, no further means for attaching or securing the connection piece in the two-way change over valve are necessary.

The power consumption of the two-way change over valve is particularly low when the armature flange facing away from the inserted connection piece is located outside the magnet yoke when the magnet coil is deenergized and in the reversed condition, i.e. when the magnet coil is energized, is in the corresponding opening of

- 4 -                              0064217

the magnet yoke and forms with the shank of the magnet yoke a substantially radial ring gap.

The sealing effect of the two-way change over valve with reduced closing force can be improved by designing the valve closing members conical and elastic.

A further reduction of the armature weight and a good sealing of the valve closing members on the corresponding valve seats can be achieved, if the valve closing members are substantially cylindrically shaped and the front surfaces cooperating with the corresponding valve seats are convex shaped whereas the valve seats are convex, as well, which gives as a result a significant shortening of the valve closing members.

A lower magnetic resistance of the magnetic circuit resulting in a lower power consumption of the magnetic coil can be obtained, if the axially outwardly facing part of the armature flange opposite the connection piece is cylindrically shaped and the axial extension of the cylindrical part corresponds at least the thickness of the corresponding shank of the yoke.

The drawing shows a two-way change over valve in accordance with the innovation, wherein

Fig. 1 is a two-way change over valve in accordance with the innovation, in partial section along the line I - I according to Fig. 2 in a side view,

Fig. 2 is the two-way change over valve in accordance with the innovation according to Fig. 1 in a plan view and

Fig. 3 is a two-way change over valve in accordance with the innovation having convex shaped valve closing members and convex shaped valve seats in a sectional view along the axis.

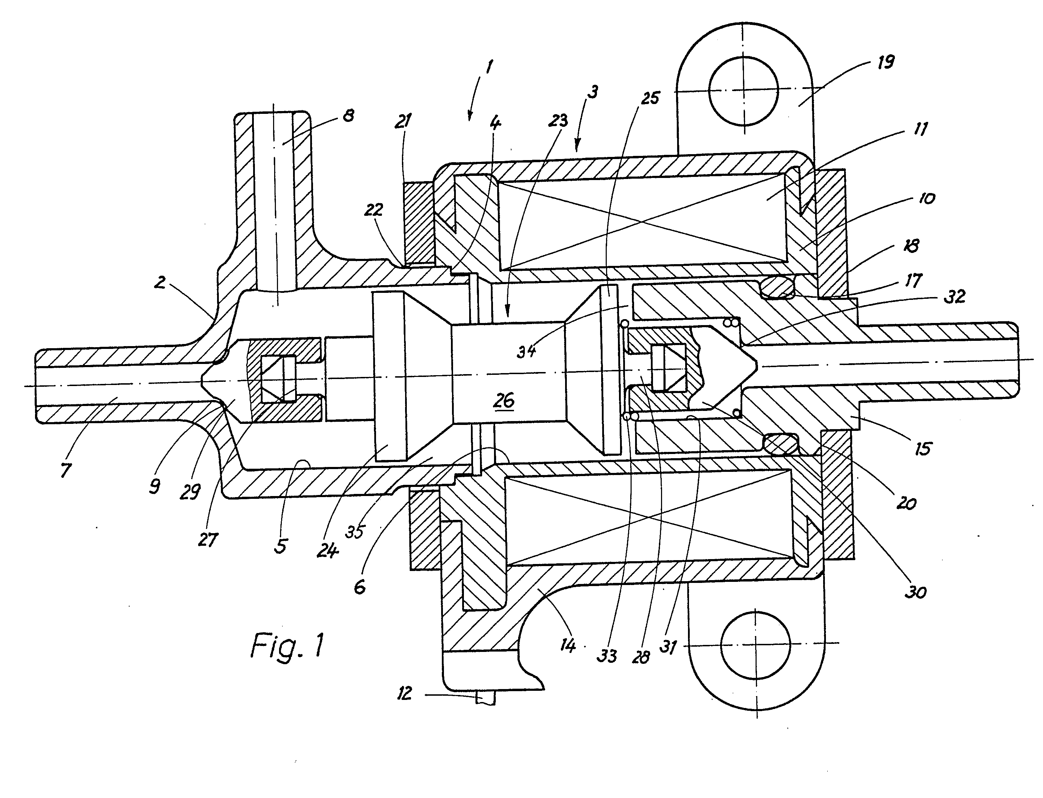

The two-way change over valve 1 shown in Fig.1 has a lower housing section 2 and a magnet coil 3 which are connected with one another by an ultrasonic weld seam 4 running round the circumference in such a way that an armature bore 5 in the lower housing section 2 is in alignment with an armature bore 6 in the magnet coil 3.

The lower housing section 2 has two hose connections 7 and 8 which can be connected with suitable consumers or sources, with the hose connection 7 being coaxially aligned to the armature bore 5, 6 and opening out in the lower housing section 2 into a valve seat 9. The magnet coil 3 contains a core former 10 with a winding 11 attached to it, with the beginning and the end of the winding being connected with contact lugs 12 and 13. The contact lugs 12 and 13 plug into the core former 10 and are sealed together with the winding 11 onto the core former 10 by means of a sealing compound 14 which surrounds and hermetically seals the magnet coil 3.

A substantially cylindrically-shaped and ferromagnetic connection piece 15 is plugged in the side of the armature bore 6 facing away from the lower housing section 2, with this connection piece 15 being provided with a groove in which an O-ring 17 is positioned sealing the connection piece 15 against the armature bore 6. The connection piece 15 runs through a shank 18 of a C-shaped magnet yoke 19 abutting a face of the magnet coil 3, and is supported at the shank 18 by means of a shoulder 20. The other shank 21 of the C-shaped magnet yoke 19 lies against the opposite face of the magnet coil 3 and contains an opening 22 through which the lower housing section runs into the core former 10 of the magnet coil 3.

In the armature bore 5, a ferromagnetic armature 23 is located,       end faces of which are each formed into an integral flange 24, 25. The diameters of the flanges 24, 25 are greater than the central section 26 of the armature 23. The flanges 24 and 25 end in integrally formed extensions 27 and 28 with grooves provided therein, with elastic, approximately conical valve closing members 29, 30 undetachably mounted on said extensions. The valve closing member 29 coacts with the valve seat 9 in the lower housing section 2 while the valve closing member 30 is located in a cylindrical recess 31 of the connection piece 30 and coacts with the valve seat 32 arranged in the connection piece 15. Between the valve closing member 30 and the recess 31 a spring 33 is located which rests with its one end on the base of the recess 31 and with its other end on the flange 25 of the armature 23, and which elastically biases the armature 23 into the position in which the valve closing member 29 rests on the valve seat 9, sealing it.

The flange 25 limits together with the inward-facing surface of the connection piece 15 an axially extending, magnetic ring gap 34, while the flange 24 forms together with the opening 22 a substantially radially extending magnetic ring gap 35. In the rest position, i.e. when the magnet coil 3 is not energized, the flange 25 is sufficiently far from the connection piece 15 that its supporting on the connection piece 15 does not obstruct the closing movement of the valve closing member 30.

When a vacuum source is connected to the hose connection 7 and a vacuum-actuated motor to the hose connection 8, the vacuum-actuated motor is ventilated through the armature bore 5, 6 and the connection piece 15 when the armature 23 is in the position shown in Fig. 1. As soon as the magnet coil 3 is energized, the armature 23 moves out of the position shown in Fig. 1 to the right counter to the force of the spring 33 until the valve closing member 30 rests on the valve seat 32, whereby the valve closing member 29 is lifted from the valve seat 9 and the vacuum source is connected via the hose connection 8 to actuate the same. When the current through the magnetic coil 3 is once more switched off, the spring 33 moves the armature 23 to the left until the valve closing member 29 once more rests on the valve seat, whereby the motor connected to the hose connection 8 is again ventilated.

By using an armature with a tapered central section, the mass is lowered so that a weaker spring is possible for biasing. Moreover, the tapered armature 23 permits transverse division of the valve housing in the area of the tapering and presents no difficulties for ultrasonic welding for assembly at this point, which ensures that projecting welding beads which may occur do not affect the mobility of the armature 23.

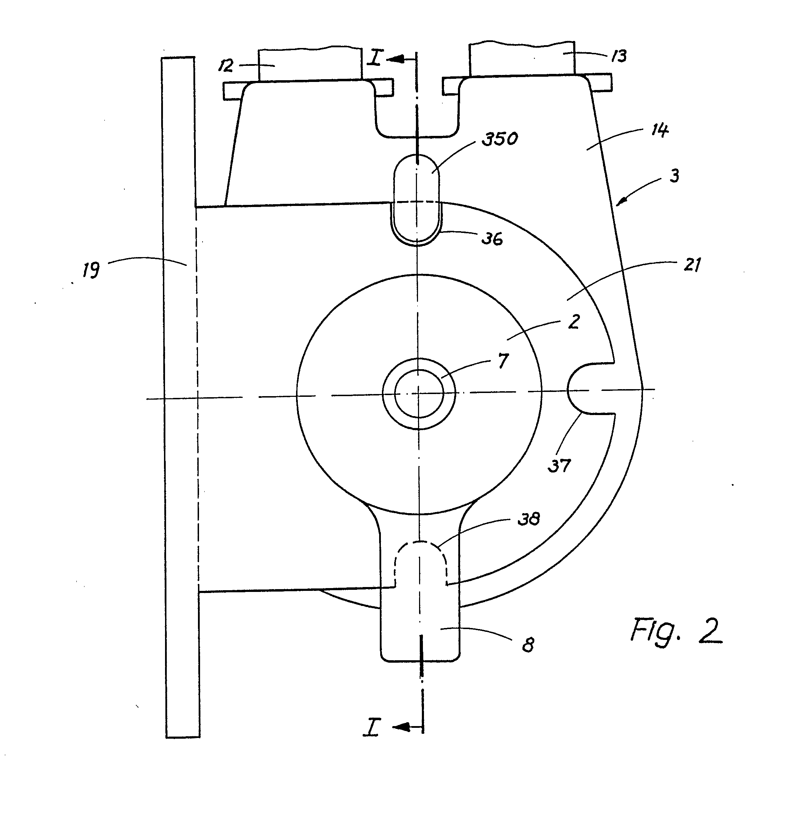

As can be seen from Fig. 2, an extension 35 can be moulded onto the face of the magnet coil 3 abutting the shank 21, which extension coacts with a corresponding recess 36, 37, 38 arranged in the shank 21 in such a way that the magnet coil 3 can be inserted and fixed with differing positions of the contact lugs 12 and 13, related to the magnet yoke 19.

For assembly, the magnet coil 3 is first brought into the desired position in the magnet yoke 19 and then the connection piece 15 is pressed through the armature bore into the shank 18 of the magnet yoke 19. After the spring and the armature 23 have been pressed in, the lower housing section is connected with the core former 10 of the magned coil 3 by the ultrasonic weld seam 4.

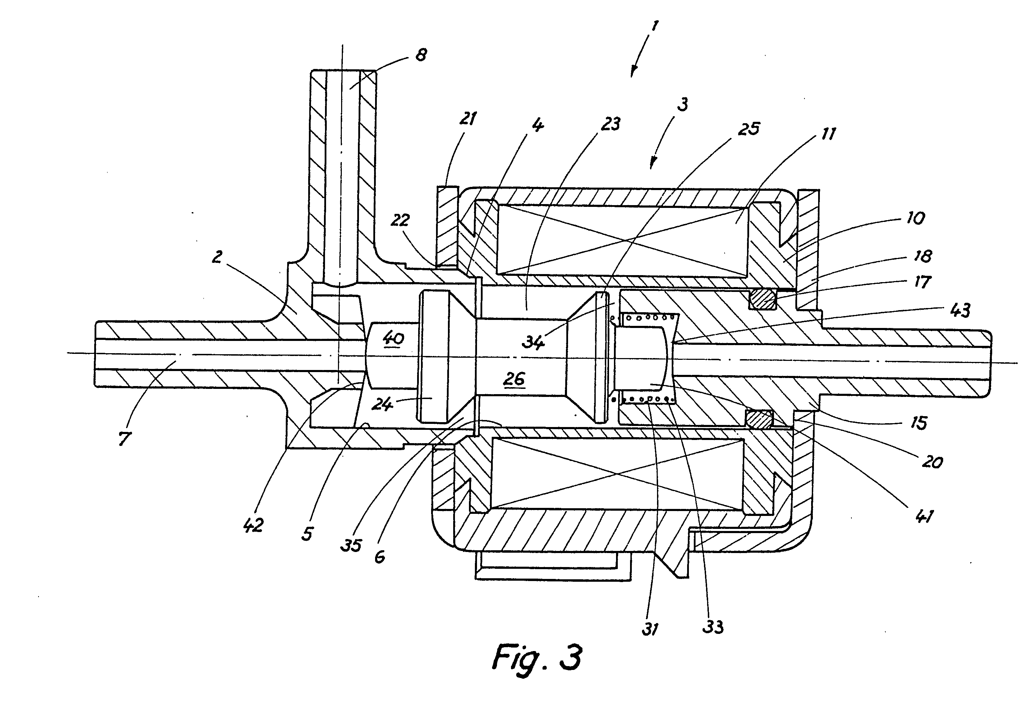

Fig. 3 depicts another embodiment of the two-way change over valve 1 in which like members as those of the two-way change over valve according to Fig. 1 are denoted with the same numerals

- 8 -

and not further described.

As with the embodiment of Fig. 1, a rotational symmetric ferromagnetic armature 23 is arranged in the armature bore 5 which is formed in the lower housing section 2 and the core former 10 respectively, which armature 23 is provided with an intermediate section 26 having reduced diameter and with flanges 24 and 25 having enlarged diameters at the front ends. The armature flange 24 opposite the connection piece 15 is cylindrically shaped in a section which extends outwardly while the height or axial extension of the cylindrical section or part corresponds at least the thickness of the corresponding shank 21 of yoke 19 so that an air gap induction is provided which is as powerful as possible if the armature 23 is operated by an activated magnet coil 3.

On the two axially opposite arranged front surfaces of flanges 24 and 25 the armature 23 comprises two substantially cylindrically shaped resilient valve closing members 40, 41 having front surfaces which are convex shaped. The valve closing members 40, 41 can be fixed on extensions 27 and 28 as with the embodiment of Fig. 1, or they can resiliently plugged in a concentric opening extending through the armature 23 by means of suitable extensions on the valve closing members 40 and 41 in order to obtain a further reduction in weight of the armature 23.

For providing a good sealing between the convex shaped front surfaces of the valve closing members 40 and 41 with low sealing forces, the valve seats 42 and 43 cooperating with the valve closing members 40 and 41 are also convex shaped and extend from the corresponding wall to the inside and in direction to the valve closing members 40 and 41.

-1-

Claims

1. An electro-magnetic two-way change over valve for controlling of vacuum  connections in vehicles, having: a valve housing containing an armature bore connected to a first connection, said housing having a connection piece which contains a first valve seat connected to a second connection and which is inserted sealed at one end into said armature bore and also having a lower housing section arranged at the other end of said armature bore, a second valve seat connected to a third connection being formed in said lower housing section; a ferromagnetic armature movably positioned in the armature bore, said armature having on each of its two faces a valve  closing member cooperating each with one of the valve seats, being biased by a spring in the direction of the second valve seat, and lying in the magnetic          circuit of a magnet coil which is attached to a core former, c h a r a c t e r i z e d in that the oblong armature (23) has on each face a ferromagnetic flange (24, 25), that the two flanges have a larger·diameter than the section (26) of the armature (23) lying between the flanges, and that the ferromagnetic connection piece (15) is part of the magnetic  closing circuit (15, 19).

- 2 -

2. Two-way change over valve according to Claim 1, characterized in that the core former (10) of the magnet coil (3) is part of the valve housing (2, 10) and is ultrasonic welded to the lower housing section (2).

3. Two-way change over valve according to Claim 2, characterized in that the weld seam (4) lies between the two flanges (24, 25) of the armature (23) in every operating condition of the two-way. change over valve (1).

4. Two-way change over valve according to Claim 1, characterized in that the magnetic closing circuit (15, 19) has a C-shaped yoke (19) straddling the magnet coil, with the connection piece (15) running through one shank (18) of said yoke and with the other shank having an opening (22) in which is located the valve housing (2).

5. Two-way change over valve according to Claim 4, characterized in that the fit between the connection piece (15) and the yoke (19) is a press fit.

6. Two-way change over valve according to Claim 4, characterized in that the flange (24) of the armature (23) facing away from the connection piece (15) is located outside the yoke (19) when the magnet coil (3) is deenergized and that it forms a radial ring gap (35) with the opening (22) in the associated shank (21) of the yoke (19) when the magnet coil (3) is energized.

7. Two-way change over valve according to Claim 1, characterized in that the elastically designed valve closing members (29, 30) are conically-shaped.

8. Two-way change over valve according to claim 1, characterized in that the valve closing members (29, 30) are substantially cylindrically shaped their front surfaces cooperating with the corresponding valve seat (42, 43) are convex shaped, and said valve seats (42, 43) are convex, as well.

9. Two-way change over valve according to claim 1, characterized in that the armature (23) comprises a concentric opening extending through same in which opening the valve closing members (29, 30, 40, 41) are inserted by means of integrally formed extensions.

10. Two-way change over valve according to claim 1, characterized in that the axially outward facing part of the armature flange (42) opposite the connection piece (15) is cylindrically shaped and the axial extension of said cylindrical part corresponds at least the thickness of the corresponding shank (21) of said yoke (19).

Fig. 1

1/3

0064217

Fig. 2

Fig. 3

3/3

0064217

# European Patent Office

## EUROPEAN SEARCH REPORT

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| A | SOVIET INVENTIONS ILLUSTRATED, section Q, week C 16, May 28, 1980 <br><br> DERWENT PUBLICATIONS LTD., London, Q 66 <br> page 16 <br><br>    * SU-679 763 (LOMOVTSEVVA) * <br><br> & SU-A-679 763 <br><br> -- | 1,2,8, 10 | F 16 K 31/02 <br><br> F 16 K 51/02 <br><br> F 16 K 11/04 |
| A | CH – A – 352 209 (SIEMENS-SCHUCKERT-WERKE AG) <br><br>    * Page 1, columns 1,2; fig.1 * <br><br> -- | 1,2,8, 9,10 | |
| A | DE – B – 1 239 537 (PARKER HANNI-FIN CORPORATION) <br><br>    * Claims 1,2; fig. 1 * <br><br> -- | 1,8 | **TECHNICAL FIELDS SEARCHED (Int.Cl. ³)** <br><br> F 16 K 11/00 <br> F 16 K 31/00 <br> F 16 K 51/00 <br> B 60 K 15/00 <br> B 60 K 17/00 |
| A | GB – A – 1 190 197 (SMITHS INDUSTRIES LIMITED) <br><br>    * Page 2, column 1, line 5 – page 3, column 1, line 56; fig. 1,3 * <br><br> -- | 1 | |
| A | DE – B – 1 104 783 (INTERNATIONAL BASIC ECONOMY CORPORATION) <br><br>    * Fig. 1 * <br><br> -- | 1,8-10 | |
| A | DE – A1 –2 508 483 (GRA GESELL-SCHAFT FUR REGELUNGSTECHNIK UND AUTOMATION MBH) <br><br>    * Fig. 1-4 * <br><br> -- | 1,8 | **CATEGORY OF CITED DOCUMENTS** <br><br> X: particularly relevant if taken alone <br> Y: particularly relevant if combined with another document of the same category <br> A: technological background <br> O: non-written disclosure <br> P: intermediate document <br> T: theory or principle underlying the invention <br> E: earlier patent document, but published on, or after the filing date <br> D: document cited in the application <br> L: document cited for other reasons |
| A | US – A – 2 891 606 (E.C. HORTON) <br><br>    * Fig. 2 * . <br><br> -- | 1,8 | |

| | | &: member of the same patent family, corresponding document |
|---|---|---|
| X | The present search report has been drawn up for all claims | |

| Place of search | Date of completion of the search | Examiner | |
|---|---|---|---|
| VIENNA | 03-08-1982 | | ROUSSARIAN |

EPO Form 1503.1  06.78

European Patent Office

**EUROPEAN SEARCH REPORT**

| DOCUMENTS CONSIDERED TO BE RELEVANT | | | CLASSIFICATION OF THE APPLICATION (Int. Ci.) |
|---|---|---|---|
| Category | Citation of document with indication, where appropriate, of relevant passages | Relevant to claim | |
| A | DE - C - 975 662 (CONCORDIA MASCHINEN UND ELEKTRIZITÄTS-GESELLSCHAFT MBH) <br> * Fig. 1 * <br> ---- | 1,2,8 | |
| | | | **TECHNICAL FIELDS SEARCHED (Int. Cl. 3)** |

EPO Form 1503.2   06.78